# EUROPEAN PATENT APPLICATION

(11) **EP 4 817 806 A1**
(43) Date of publication of application: **07.10.2026**
(21) Application number: 25167430.5
(22) Date of filing: 31.03.2025
(51) Int. Cl.: B25J 9/16, B66C 13/40, B66C 13/46

(54) **OPERATING A WORKING EQUIPMENT ARRANGEMENT BY COMMUNICATING A WORKING CONDITION VIA AN EXTERNAL SERVER**

(71) Applicant: Hiab AB, 215 32 Malmö (SE)
(72) Inventor: Lindström, Elin, SE-824 30 Hudiksvall (SE); Angelika, Östberg, SE-824 91 Hudiksvall (SE); Erik, Asp, SE-824 42 Hudiksvall (SE); David, Näslund, SE-187 73 Täby (SE)
(74) Representative: Bjerkén Hynell KB

(57) **Abstract**

A method (100) of operating a working equipment arrangement (1) for load handling comprising
- receiving (110) a set of sensor input data from a sensor system (10),
- determining (120) a set of present working conditions of the working equipment arrangement (1) based on the received sensor input data,
- receiving (130) operator input data from a first interface device (20.1),
- controlling (140) the load handling based on the received operator input data and the set of present working conditions,
- managing (150) a first communication session (A) between the working equipment arrangement (1) and an external server (CS), comprising communication of the set of present working conditions,
- managing (160) a second communication session (B) between the external server (CS) and a second interface device (20.2) for an operator of the working equipment arrangement, comprising communication of at least one present working condition,
- transferring (170) the at least one present working condition from the controller (30) to the second interface device (20.2) via the external server (CS, and
- communicating (180) the at least one present working condition to the operator

## Description

### Technical field

The present disclosure generally pertains to working equipment for load handling, and more particularly relates to a method of operating a working equipment arrangement for load handling and to a working equipment arrangement for load handling.

### Background

Operating working equipment for load handling may involve complex decision-making in real time. The working equipment typically comprises a remote manoeuvring unit that is manoeuvred by an operator during the load handling, and a controller that is in direct communication with the remote manoeuvring unit and performs the control.

To facilitate the operation of the working equipment, it may be desired to provide operators with detailed and task-relevant information. The operators typically rely on feedback to ensure accurate, safe, and efficient load handling. Traditionally, information about load handling and the status of the working equipment has been obtained by the operator through direct observation of the load handling process, sometimes supported by visual indicators on the working equipment or on the remote manoeuvring unit.

Even though the available solutions for working equipment load handling generally function satisfactorily, there is still room for improvement for example in terms of cost-effectiveness, operational efficiency, and ease of operation.

### Summary

An object of the present invention is to improve prior art working equipment operation solutions. Improvements may involve providing relevant working condition data to an operator in an efficient and secure manner. A further advantage may be achieved by offloading computational tasks from the control system of the working equipment to external processing resources, which may in addition improve operator guidance, facilitate software updates, and enhance overall security.

The invention is exemplified through the embodiments disclosed herein. **In** accordance with one aspect, the present disclosure provides a method of operating a working equipment arrangement for load handling. The working equipment arrangement comprises a movable arm for moving a load from a first position to a second position, the movable arm comprising a plurality of arm sections, pivot joints or telescopic connections joining the arm sections, a set of actuators for operating movements of the arm sections, and a load manipulator for engaging the load during the load handling. The working equipment arrangement further comprises a sensor system including a plurality of sensor units for monitoring present positions of the plurality of arm sections and for monitoring operational status of the working equipment arrangement. A first interface device, such as a remote manoeuvring unit, is provided for receiving operator input data for the load handling. The working equipment arrangement also comprises a controller.

The method comprises, by the controller, receiving a set of sensor input data from the sensor system, determining a set of present working conditions of the working equipment arrangement based on the received sensor input data, receiving operator input data from the first interface device, and controlling the load handling with the movable arm based on the received operator input data and the determined working conditions.

The method comprises managing a first communication session between the working equipment arrangement, e.g. its controller, and an external server over a wireless network, the first communication session comprising communication of the present working conditions of the working equipment arrangement. The method further comprises managing a second communication session between the external server and a second interface device for an operator of the working equipment arrangement, the second communication session comprising communication of at least one present working condition of the working equipment arrangement. The method further comprises transferring the at least one present working condition to the second interface device via the external server and communicating the at least one present working condition to the operator. Typically, the second interface device may be a handheld computational device, such as a mobile phone (smartphone) or a laptop.

Advantages of the present method may involve that certain functions, such as operator support functionality, are implemented outside the working equipment arrangement. As a result, the controller of the working equipment arrangement may be relieved from specific computational tasks. This may ensure that the e.g. controller of the working equipment arrangement is not overloaded with processing demands. **In** addition, updates of, for example, support-related functionality may be enabled without affecting the hardware of the working equipment arrangement. The present method may further be retrofitted to existing working equipment arrangements, and the method may be relatively independent of the particular type of working equipment arrangement. Further advantages involve enabling individual configurations and adaptations for the operator in question, without affecting the working equipment arrangement.

Beneficially, the present disclosure provides for two independent user interfaces, the first and second interface devices. These devices may communicate via separate communication links, ensuring a high level of communication security. The first interface device is configured to control the load handling, whereas the second interface device is associated with operator support functionality, which may be beneficial for computational resource management and for system security. Moreover, the disclosure may address the problem of providing the operator of the working equipment arrangement with real-time information from the working equipment.

Furthermore, as a result of the present method, the controller may focus on controlling the load handling based on operator input data received from the first interface device, which may communicate with the controller in a security-certified manner. At the same time, e.g. functionality intended to assist the operator may be provided via a second interface device receiving data from the external server. The first communication session between the working equipment arrangement, e.g. its controller, and the external server is separate from the communication between the controller and the first interface device, which may be beneficial from a security perspective.

Moreover, the second communication session, comprising communication of at least one present working condition from the working equipment arrangement to the external server, may be one-directional. As a result, the support functionality may be implemented without requiring additional security mechanisms on the side of the working equipment arrangement. **In** other words, the working equipment arrangement may transmit data to the external server, but not receive any data from the external server.

Optionally, the method comprises transferring the at least one present working condition from the second interface device to a third interface device. The method may further comprise communicating the at least one present working condition to the operator by the third interface device. Thereby, the method may ensure that the present working condition is successfully conveyed to the operator in the actual load handling situation. The third interface device may be arranged, and specifically configured, to provide the generated instruction to the operator. The third interface device may e.g. be a headset adapted to be worn by the operator. The method may comprise communicating the at least one present working condition to the operator by the second interface device. The second interface device may comprise a display, e.g. a smartphone screen, and the method may comprise providing the at least one present working condition to the operator on the display.

The second interface device may communicate with the working equipment arrangement over a wireless communication network. The second interface device may communicate with the working equipment arrangement over a wireless communication network via an external server. The wireless communication network may include, but is not limited to, mobile cellular networks such as 3G, 4G, or 5G.

Optionally, the third interface device may comprise an augmented reality device or a virtual reality device. The method may comprise providing the at least one present working condition as a graphical overlay. Thereby, the present working condition may be presented in a clear and precise manner to an operator, for example an operator with limited experience, thereby facilitating operation. The graphical overlay may comprise arrows or other visual indicators for visualising the present working condition in association with the load handling or components of the working equipment arrangement. The graphical overlay may be superimposed on a real-time camera stream. Merely as one example, the present working condition may represent a hydraulic pressure, and the graphical overlay may point to a specific hydraulic actuator and clearly inform the operator about the current pressure, which may be close to or at a threshold level.

Optionally, the second interface device comprises, or is adapted to be connected to, an acoustic transducer. The method may comprise providing the at least one present working condition to the operator as audio. An advantage of using audio may be that the operator, who typically already receives visual information from multiple sources and possibly receives tactile feedback, can receive the information while maintaining focus on the load handling, the working equipment arrangement, and the surroundings.

Optionally, the method comprises providing the present working condition as spoken language. Advantages of providing the present working condition in spoken language or as a voice message involve that both tone and loudness may be varied to emphasize any urgency or importance, when appropriate. Moreover, such present working condition may be given in different languages, ensuring accessibility for a diverse range of operators and countries. The spoken present working condition may be synthesized or pre-recorded. Optionally, the spoken present working condition is stored in or generated by the controller, the external server or the second interface device. With a present working condition presented as spoken language, the operator of the working equipment arrangement may still monitor the working environment visually while receiving the present working condition.

Optionally, the method comprises generating an instruction intended for the operator of the working equipment arrangement, the instruction being based on the set of present working conditions and being indicative of a recommended operator input data. Advantages involve ensuring high efficiency and safety, while requiring less operator expertise. The method may further comprise communicating the instruction to the operator as spoken language. The operator typically receives, or can obtain, information related to the operation of the working equipment arrangement through visual observation, display screens, warning signals, and/or haptic feedback from control levers or joysticks of a remote manoeuvring unit. By providing the instruction as spoken language, which typically specifies at least one action to be performed by the operator, it may be ensured that relevant or necessary guidance continuously reaches the operator in efficient manner. Operating working equipment arrangement takes time to learn, and even for skilled operators there is a continued need to make operations more time-efficient, energy-efficient, safe, and optimized from a performance perspective. Merely as one example, when operating a truck-mounted loader crane for handling recycling bins, the operator must consider the navigation of both the crane and the carried bin, which may be heavy and bulky, while simultaneously managing a specific assignment that may involve loading or unloading close to a domestic building or at a confined or hard-to-reach location. The operator must also pay attention to the surrounding environment, which may be crowded with traffic, and furthermore, the ground may be unstable. The instruction may result in accelerated learning, and in addition reduce the required level of operator experience and skill. Many working equipment arrangements include built-in safety features that halt or slow down movement e.g. if there is a risk of imbalance or overload. Through the present disclosure, an instruction or a present working condition may be provided to the operator, allowing the operator to understand the cause of the halt or the slow down, and how to manoeuvre the working equipment arrangement to safely exit e.g. a stability warning or an overload.

Optionally, the method comprises generating a set of instructions for the operator of the working equipment arrangement. The method may further comprise communicating the set of instructions to the operator. Advantages may include the ability to guide the operator in performing complex control tasks, ensuring precise operation of the working equipment arrangement, typically its movable arm.

Optionally, a set of instructions may be transmitted in a sequence, wherein each instruction is presented step-by-step. As a result, the operator does not need to memorize a sequence before execution, which may simplify handling and reduce required operator experience and skill. The working equipment arrangement may be adapted to continuously monitor the present positions of the plurality of arm sections and the operational status of the working equipment arrangement, and to provide instructions in sequence, step-by-step, as the respective instructions are completed by the operator.

Optionally, the generated set of instructions comprises a first recommended operator input data relating to a first actuator and a sequential second recommended operator input data relating to a second actuator. An advantage of this feature may be that the operator can receive simple, step-by-step guidance, facilitating advanced control of the working equipment arrangement, particularly its movable arm. The instructions may comprise information about levers, buttons or joystick interactions on the first interface device to actuate or work with. The instructions may in addition, or as an alternative, comprise arms to raise or lower, or other parts of the working equipment arrangement to rotate, lower, raise, or tilt. Optionally, the set of present working conditions corresponds to the manipulator being in a present position, and the operator input data comprises a set of target working conditions corresponding to the manipulator being in a predefined target position. For example, the set of target working conditions may correspond to the movable arm being in a stowed or folded position or may correspond to an arm position required during a test. The generated set of instructions for the operator may comprise recommended operator input data to move the manipulator from the present position to the target position. The instruction may further comprise an operator input to be continued until a preset loading, e.g. a present hydraulic pressure, is obtained. Thereby, the manipulator may be moved efficiently and safely while ensuring that the instructions remain easy to follow.

Optionally, if a set of present working conditions comprises an alert state for the working equipment arrangement, the generated instruction involves returning the working equipment arrangement to a non-alert state for operation. Advantages of this feature may involve enabling the operator to quickly, efficiently, and safely restore the working equipment arrangement from conditions such as overload or imbalance. The instruction may, for example, suggest adjusting a stabilizer, reducing movement speed, or modifying the orientation of the movable arm. The alert state may e.g. concern an overload situation or stability issue that has been identified.

Optionally, the generated instruction involves positioning at least one of the plurality of arm sections of the movable arm for increasing lifting capacity of the working equipment arrangement. As a result, the movable arm may be quickly, efficiently, and safely positioned to increase lifting capacity, ensuring efficient utilisation of the working equipment arrangement.

Optionally, the operator input data comprises a set of target working conditions. The set of target working conditions may vary depending on the context or application, as mentioned above. For example, the target working conditions may be defined to mitigate an overload situation or to adjust the orientations of the arm sections to enable increased lifting capacity. Advantages of this feature may involve enabling more advanced and, in some cases, partially automated control of the working equipment arrangement.

Optionally, the method comprises performing a test of the working equipment arrangement, such as a Vertical Stability Limit test for a working equipment arrangement in the form of a loader crane. The method may significantly simplify the execution of such tests. **In** some cases, the test may be performed by a single operator instead of two, as the communicated present working condition, or the instruction for the operator, may eliminate the need for a separate operator to provide the present working condition or guidance.

Optionally, the method comprises bringing or causing the working equipment arrangement and the second interface device to communicate their respective geographical positions to the external server. **In** other words, the external server may obtain the geographical positions of the working equipment arrangement and the second interface device. Managing the second communication session may comprise taking a distance between the working equipment arrangement and the second interface device into account, e.g., for security reasons, only permitting the second communication session when said distance is below a predefined threshold distance. The geographical positions of the working equipment arrangement and the second interface device may alternatively, or in addition, be communicated to the second interface device, and either the external server or the second interface device may determine the distance between the working equipment arrangement and the second interface device. Said respective geographical positions may additionally be used to pair the working equipment arrangement and the second interface device, e.g. when a user signs in to a service, e.g. a cloud service, and inputs certain working equipment arrangement data, such as a serial number or similar. Once paired, the second interface device may securely receive a present working condition of the working equipment arrangement. Moreover, at least one of the geographical positions may be used to set a language of a smartphone app and/or instructions or current working conditions, optionally provided as spoken language.

Optionally, the first communication session is initiated by a communication interface device of the working equipment arrangement. Typically, said communication interface device is in communication with the working equipment arrangement or more specifically with the controller of the working equipment arrangement. I.e. directly or indirectly in communication with the controller via a gateway device or other type of control and/or processing unit with an external communications interface at the working equipment arrangement. Accordingly, the first communication session between the working equipment arrangement and the external server over the wireless network may occur via the communication interface device. The communication interface device may be referred to as a gateway device.

Optionally, the first communication session comprises communication of the set of sensor input data and/or the operator input data. Optionally, the second communication session comprises communication of the set of sensor input data and/or the operator input data. Thereby, the external server and/or the second interface device may obtain the present working condition, the set of sensor input data, and/or the operator input data. By taking one or more of these into account, especially the present working condition and the operator input data, the external server and/or the second interface device may generate an instruction for the operator that may reflect the intended action of the operator, ensuring that accurate, context-aware, and timely guidance is provided. Moreover, the method may involve communicating sensor data to the operator.

In accordance with another aspect, a computer program product is provided, comprising computer-executable instructions which, when executed by the second interface device, cause the second interface device to carry out the method. In particular, the second interface device may generate the herein discussed instruction for the operator of the working equipment arrangement, the instruction being based on the set of present working conditions and being indicative of a recommended next operator input data. Advantages involve that the working equipment arrangement, such as its controller, is relieved from the computational task of generating the instruction. The second interface device may transmit the generated instruction to the instruction interface device. As mentioned, the second interface device may be a mobile phone, and the computer program product may be referred to as an app or a smartphone app.

In accordance with a general aspect, the present disclosure provides a method of operating a working equipment arrangement for load handling, the method comprising receiving a set of sensor input data from a sensor system, determining a set of present working conditions of the working equipment arrangement based on the received sensor input data, receiving operator input data from a first interface device, controlling the load handling based on the received operator input data and the set of present working conditions, managing a first communication session between the working equipment arrangement and an external server, comprising communication of the set of present working conditions, managing a second communication session between the external server and a second interface device for an operator of the working equipment arrangement, comprising communication of at least one present working condition, transferring the at least one present working condition to the second interface device via the external server, and communicating the at least one present working condition to the operator.

In accordance with another aspect, the present disclosure provides the use of the method as described herein for operating a working equipment arrangement.

Optionally, the use may involve performing a test of the working equipment arrangement, such as a Vertical Stability Limit test for a working equipment arrangement in the form of a loader crane. The operator may perform the test while utilising the communicated at least one present working condition. The use of this method may significantly simplify the execution of such tests. In some cases, the test may be performed by a single operator instead of two operators, as the instruction interface device may eliminate the need for a separate operator to provide data, instructions, or guidance.

In accordance with another aspect, the present disclosure provides a working equipment arrangement for load handling. The arrangement comprises a movable arm for moving a load from a first position to a second position and comprising a plurality of arm sections, pivot joints or telescopic connections joining the arm sections, a set of actuators for operating movements of the arm sections, and a load manipulator for engaging the load during the load handling. The arrangement further comprises a sensor system including a plurality of sensor units for monitoring present positions of the plurality of arm sections and for monitoring operational status of the working equipment arrangement. A first interface device, such as a remote manoeuvring unit, e.g. for an operator standing in the vicinity of the working equipment or sitting in a cabin of vehicle, e.g. a truck, on which the working equipment arrangement is mounted, is configured to receive operator input data for load handling. A controller is arranged to receive a set of sensor input data from the sensor system, determine a set of present working conditions based on the received set of sensor input data, receive operator input data from the first interface device, and control the load handling with the movable arm based on the operator input data and determined present working conditions. A communication interface device connected to the controller is arranged to manage a first communication session between the working equipment arrangement and an external server over a wireless network. The first communication session comprises the set of present working conditions. The working equipment arrangement is configured, via a second communication session between the external server and a second interface device for an operator of the working equipment arrangement, enable the second interface device to receive at least one present working condition from the working equipment arrangement (1), typically its controller, via the external server, and to communicate the at least one present working condition to the operator.

Optionally, the second interface device may be arranged to communicate the at least one present working condition to the operator via a third interface device. The third interface device may advantageously be arranged, and specifically configured, to provide the generated instruction to the operator.

Optionally, the working equipment arrangement may be a loader crane configured to be mounted on a vehicle and for loading the load onto the vehicle and unloading the load from the vehicle. Thus, in accordance with another aspect, the present disclosure provides a loader crane configured to be mounted on a vehicle. The working equipment arrangement may be configured to be mounted on a vehicle, to load and unload the vehicle. Said vehicle may be a transport vehicle, such as a truck.

Optionally, the second interface device for the operator may be comprised in the working equipment arrangement. The second interface device may be configured to manage the second communication session.

Optionally, the working equipment arrangement comprises a computer program product for the second interface device. The computer program product may comprise computer-executable instructions which, when executed by the second interface device, cause the second interface device to enable the second interface device to receive at least one present working condition from the controller via the external server and communicate said at least one present working condition to the operator. The second interface device may be a mobile phone, and the computer program product may be referred to as an app or a smartphone app.

The present disclosure may involve communicating the at least one present working condition of the working equipment arrangement to the operator via speakers or displays of the vehicle.

Advantages and further possible features of the computer program product, the general aspect, the use, the working equipment arrangement, and of the loader crane correspond to those mentioned in connection with the method of operating the working equipment arrangement.

### Brief description of the drawings

Figure 1 shows a working equipment arrangement and a transport vehicle, and illustrates an external server and an operator. The operator carries a first interface device, exemplified as a remote manoeuvring unit, and a second interface device, exemplified as a mobile phone. The operator further wears a third interface device exemplified as a headset.
Figure 2 illustrates a method of operating a working equipment arrangement for load handling.

### Detailed description

Exemplifying embodiments of the working equipment arrangement and the method of operating a working equipment arrangement will now be described in detail with references to the appended figures.

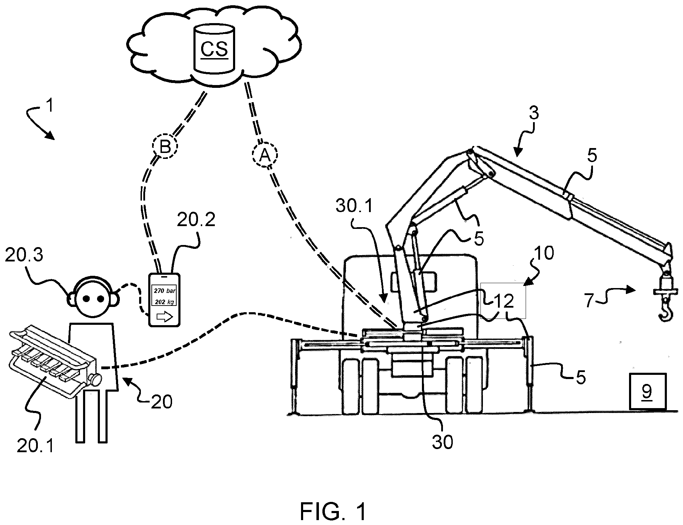

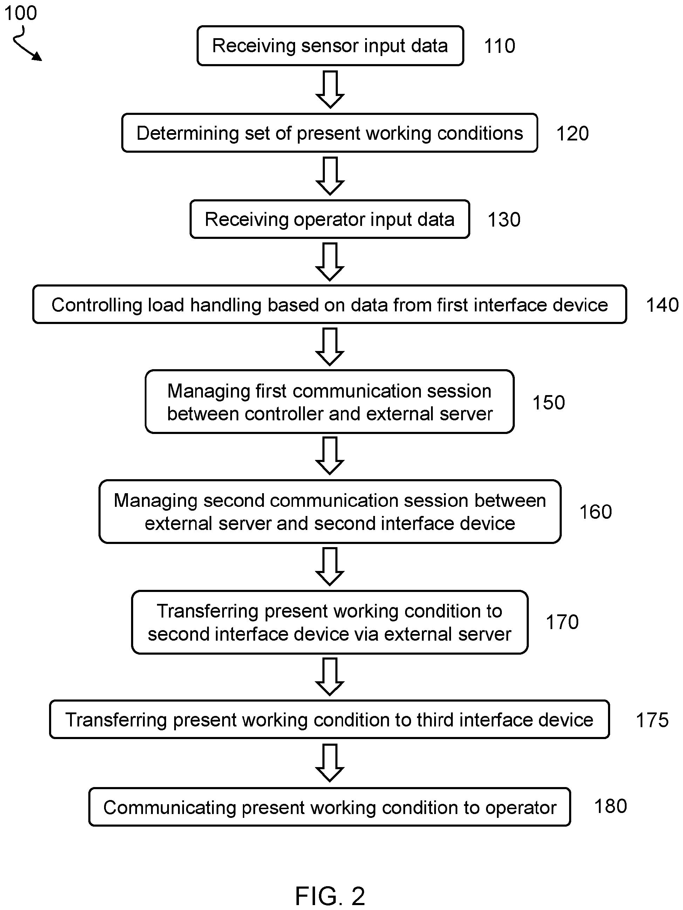

Figure 1 shows a working equipment arrangement 1 for load handling. Figure 2, best understood in connection with figure 1, discloses a method 100 of operating a working equipment arrangement for load handling. The method 100 may comprise operating the working equipment arrangement shown in figure 1.

Returning to figure 1, the present working equipment arrangement 1 comprises a movable arm 3 for moving a load 9 from a first position to a second position. For example, the load 9 may be loaded or unloaded from a vehicle, such as a transport vehicle in the form of a truck. The movable arm 3 comprises a plurality of arm sections, pivot joints or telescopic connections joining the arm sections and a set of actuators 5 for operating movements of the arm sections. The working equipment arrangement 1 further comprises a load manipulator 7, here exemplified as a hook, for engaging the load 9 during the load handling.

Actuators 5, here exemplified hydraulic actuators, including hydraulic cylinders, are provided for moving the arm, the arm sections, stabilizer legs and extension of those, and the load manipulator. There are typically undepicted hydraulic pumps and valves connected to the hydraulic actuators, forming part of a hydraulic system. The actuators 5 may further be electro-mechanical actuators or electro-hydraulic actuators, the system of actuators may further comprise a combination of hydraulic, electro-mechanical and electro-hydraulic actuators.

The working equipment arrangement may optionally also comprise a number of stabilizers, two shown in figure 1, to stabilise the working equipment arrangement and/or the vehicle. The stabilizers may, as shown, comprise telescopic members extendible horizontally and vertically. The stabilizers may be extended laterally from the working equipment arrangement and may be extended downwards towards the ground as required to obtain adequate support or stability. As the focus of the present disclosure is not on the basic design of the working equipment arrangement, but rather on how it is operated and configured for efficient operation, the basic design of the working equipment arrangement is not described in detail herein.

The working equipment arrangement 1 further comprises a sensor system 10 comprising a plurality of sensor units 12 for monitoring present positions of the plurality of arm sections and for monitoring the operational status of the working equipment arrangement 1. As indicated in figure 1, there may be sensor units 12 provided to monitor positions of the arm sections and stabilizers. There may be sensor units 12 provided to monitor hydraulic oil pressures of hydraulic actuators, to monitor the present load on the respective movable arm sections and stabilizers. Examples of sensor units include rope sensors, angle sensors, position and length sensors (such as magnetostrictive linear position sensors), pressure and flow sensors, accelerometers, inertial measurement units, image sensors, cameras, LIDARs, and radars.

As shown in figure 1, a first interface device 20.1 (enlarged in the figure), exemplified as a remote manoeuvring unit, is provided for receiving operator input data for the load handling. The first interface device 20.1 may be arranged to receive operator input, for example by including a control lever that is manually actuated by the operator 20. Six control levers are shown in figure 1. The first interface device 20.1 may comprise other control means such as buttons, joysticks, or menu-selection displays, etc. The first interface device 20.1 may convert the operator input to operator input data. The first interface device 20.1 is illustrated as being carried by an operator. Typically, the first interface device 20.1 comprises an undepicted neck band to facilitate carrying. The working equipment arrangement 1 may in addition comprise an undepicted fixed operator interface (arranged on the movable arm or on a vehicle on which the working equipment arrangement 1 is mounted), e.g. comprising a touch screen or buttons/levers for input of operator input data.

As schematically denoted in figure 1, the working equipment arrangement 1 comprises a controller 30 arranged to receive a set of sensor input data from the sensor system 10, determine a set of present working conditions of the working equipment arrangement 1 based on the received set of sensor input data, receive operator input data from the first interface device 20.1, and control the load handling with the movable arm 3 based on the received operator input data and the set of present working conditions. Typically, the controller 30 is arranged to control actuators, and in the case of hydraulic actuators the hydraulic system including pumps and valves connected to the hydraulic actuators, in a manner known per se and not described in detail herein.

The first interface device 20.1 may be configured to communicate with the controller 30 via a local wireless communication link. For example, the communication may be established via a short-range radio connection, such as a dedicated industrial radio system operating in an unlicensed frequency band, e.g. at 2.4 GHz.

A communication interface device 30.1, e.g. a gateway device, is connected to the controller 30 and arranged to manage a schematically illustrated first communication session A between the working equipment arrangement 1 and an external server CS (illustrated as a cloud) over a wireless network. The first communication session A comprises at least the set of present working conditions.

The working equipment arrangement 1 is configured to manage a second communication session B between the external server CS and a second interface device 20.2 for the operator 20 of the working equipment arrangement, thereby enabling the second interface device 20.2 to receive at least one present working condition from the working equipment arrangement 1, typically the controller 30, via the external server CS and communicate said at least one present working condition to the operator 20.

Figure 1 illustrates the second interface device 20.2 as a mobile phone (enlarged in the figure). As illustrated, the mobile phone comprises a display that may be used for providing the at least one present working condition to the operator 20. By way of example, the working conditions "270 bar 202 kg" are shown on the mobile phone display in figure 1, together with an arrow meant to illustratively indicate an instruction for the operator. Alternatively, or in addition, the speakers of the mobile phone may provide the working conditions and/or the instruction for the operator as audio, e.g. as spoken language. Still referring to figure 1, the present working condition or instruction may be provided to the operator by a third interface device 20.3 here exemplified as a headset. Thus, the present working condition or instruction for the operator may be provided to the operator as spoken language by means of the headset worn by the operator 20 on the head.

Referring now to figure 2 in conjunction with figure 1, a method 100 of operating a working equipment arrangement 1 for load handling is next described. To simplify understanding, the method 100 is described with reference to the working equipment arrangement 1 of figure 1, even though it is to be apprehended that the method is applicable to other working equipment.

The method 100 comprises receiving 110, by the controller 30, a set of sensor input data from the sensor system 10. This may be referred to as sensor data receiving. The set of sensor input data typically comprises a plurality of data representing positions of the arm sections in relation to other arm sections. Further, the set of sensor input data may comprise data representing positions of the stabilizers. In addition, the set of sensor input data may comprise data representing hydraulic pressures of actuators for operating movements of the working equipment arrangement 1, which may be indicative of the present load weight, and the lifting forces applied by various actuators in the working equipment arrangement. The sensor data may further indicate movement speeds of e.g. the arm sections in relation to other arm sections. Other plausible sensor input data includes operation state of the working equipment arrangement and environmental parameters such as ambient or internal temperature.

The present working condition or instruction provided to the operator, e.g. as spoken language, may be based on sensor input data from the sensor system 10 to inform the operator of operating parameters as well as instructions and recommendations. Example of spoken language present working condition provided to the operator include:
"70% 1st boom / 2nd boom / jib"
"90% 1st boom / 2nd boom / jib"
"OLP 1st boom / 2nd boom / jib"
"OLP VSL"
"front driver side leg OLP"
"front driver side leg set/unset"
"front driver side leg fully in/out"
"OLP countdown (5, 4, 3, 2, 1, 0)"
"OLP release countdown (e.g. 30, 25, 20, 15, 10, 5, OLP release enabled)"
"Hoist rope end warning"
"SAF complete"
"For more capacity, extend right stabiliser"
"For more capacity, raise/lower 1st boom"

The method 100 comprises determining 120, by the controller 30, a set of present working conditions of the working equipment arrangement 1 based on the received set of sensor input data. The determined set of present working conditions may comprise the orientation and loading of the movable arm 3. When multiple arm section positions, typically including a swivel position of the movable arm and relative angular settings and telescopic extension settings of the arm sections are considered, this may be referred to as the orientation or posture of the movable arm 3. Thus, the determined set of present working conditions may represent the present orientation or posture of the movable arm. The determined set of present working conditions may represent the present loading of the movable arm, e.g. by taking hydraulic pressures into account, stability parameters, and a maximum reach for a present load, e.g. based on a setting (e.g. present extension and ground pressure) of stabilizers.

Moreover, the set of present working conditions may comprise status from the actuators, the percentage of an available capacity or range related to the working equipment arrangement or one of its parts, available battery power or time of operation (if the working equipment arrangement is electrically powered), stability parameters, and whether there are persons moving in the area of the work or close to the working equipment arrangement. The set of present working conditions may be based on a single or on a group of sensor input data, putting the received sensor data in the right context of which part of the working equipment arrangement it relates and the unit to which it is measured with.

The method comprises receiving 130, by the controller 30, operator input data from the first interface device 20.1. This may be referred to as input data receiving. The method comprises controlling 140 the load handling with the movable arm 3 based on the received operator input data and the determined set of present working conditions. Merely as an example, the determined set of present working conditions may represent the load manipulator 7 being positioned approximately 1 metre above the load 9 on the ground at a lateral side of the vehicle, as shown in figure 1. The total loading of the movable arm 3 may be relatively low, as no load is carried by the load manipulator 7. In this situation, the operator input data may represent the operator actuating a lever of the first interface device 20.1 to lower the load manipulator 7. The controlling 140 may now result in actuating the hydraulic system to lower the movable arm 3 such that the load manipulator 7 is brought to the load 9. In some detail, several actuators 5 of the movable arm 3 may be activated to change the mutual angles between the arm sections. Next, the load manipulator 7 may engage the load 9 to lift the load 9. Operator input data may now command lifting the load manipulator 7 and the load 9.

Typically, determining 120 a set of present working conditions of the working equipment arrangement 1 and receiving 130 operator input data from the first interface device 20.1 is performed concurrently. Typically, the method 100, which is computer-implemented, comprises continuously looping the actions comprised in the method.

The method 100 comprises managing 150 a first communication session A between the working equipment arrangement, e.g. the controller 30, and an external server CS over a wireless network, wherein the first communication session A comprises communication of the set of present working conditions of the working equipment arrangement 1. Typically, the working equipment arrangement 1 may comprise a gateway device connected to the controller 30, and the gateway device may communicate with the external server CS over the wireless network.

The method 100 comprises managing 160 a second communication session B between the external server CS and a second interface device 20.2 for an operator 20 of the working equipment arrangement 1, the second communication session B comprising communication of at least one present working condition of the working equipment arrangement 1.

The wireless network for the first and second communication sessions may be a wireless communication network, such as mobile cellular network, e.g. 3G, 4G, or 5G. Thus, the second interface device 20.2 may communicate with the working equipment arrangement via the wireless communication network.

The method 100 may comprise transferring 170 the at least one present working condition of the working equipment arrangement 1 from the controller 30 to the second interface device 20.2 via the external server CS. In addition, the set of sensor input data and/or the operator input data may be transferred from the controller 30 to the second interface device 20.2 via the external server CS.

The method 100 comprises communicating 180 the at least one present working condition of the working equipment arrangement 1 to the operator. In addition, the operator input data and/or the instruction for the operator 20 may be communicated to the operator.

As has been described with reference to the working equipment arrangement 1, the method may comprise transferring 175 the at least one present working condition of the working equipment arrangement 1 from the second interface device 20.2 (here exemplified as a mobile phone) to a third interface device 20.3 (here exemplified as a headset) and communicating the at least one present working condition to the operator 20 by the third interface device 20.3. As has been mentioned, the set of sensor input data and/or the instruction for the operator may also, or alternatively, be communicated to the operator 20.

The third interface device 20.3 may comprise an augmented reality device or a virtual reality device, and the method 100 may thus comprises providing the at least one present working condition (and/or sensor input data and/or instruction for the operator) as a graphical overlay. The second interface device 20.2 may comprise, or be adapted to be connected to, an acoustic transducer, and the method may comprises providing the at least one present working condition (and/or sensor input data and/or instruction for the operator) to the operator as audio, e.g. as spoken language.

As has been mentioned, the method may comprise generating an instruction intended for the operator of the working equipment arrangement 1, the instruction being based on the set of present working conditions and being indicative of a recommended operator input data. The method 100 then further comprises communicating the generated instruction to the operator.

The method may comprise generating a set of instructions for the operator 20 of the working equipment arrangement 1 and communicating the generated set of instructions to the operator 20.

The method may comprises performing a test of the working equipment arrangement 1, such as a Vertical Stability Limit test e.g. for a working equipment arrangement in the form of a vehicle-mounted loader crane. The method may significantly simplify the execution of such tests. In some cases, the test may be performed by a single operator instead of two, as transferring the at least one present working condition may eliminate the need for a separate operator to provide said present working condition.

In some examples, the method comprises causing the working equipment arrangement 1 and the second interface device 20.2 to communicate their respective geographical positions to the external server CS. Managing 170 the second communication session B may comprise taking a distance between the working equipment arrangement 1 and the second interface device 20.2 into account, for example only permitting the second communication session B when said distance is below a predefined threshold distance.

A computer program product may comprise computer-executable instructions which, when executed by the second interface device 20.2, cause the second interface device 20.2 to generate the instruction for the operator, or to perform the test of the working equipment arrangement, or to causing the working equipment arrangement and the second interface device to communicate their respective geographical positions to the external server. By the second interface device 20.2 performing the test of the working equipment arrangement may be meant that the second interface device 20.2 aids an operator in performing the test, e.g. by instructing the operator about steps of the test and/or during the test providing the operator with present working conditions.

The method may be used for operating a working equipment arrangement 1. In some examples, the use comprises performing a test of the working equipment arrangement, such as a Vertical Stability Limit test for a working equipment arrangement in the form of a loader crane, wherein said use comprises an operator performing the test while utilising the communicated at least one present working condition.

In figure 1, a loader crane is shown as an exemplifying embodiment. Thus, the herein described working equipment arrangement 1 may be a loader crane. The working equipment arrangement 1 may comprise a loader crane. Alternatives to the loader crane are e.g. a skip loader, a forestry crane, a recycling crane, a hooklift, a forklift, a tail lift, and a load handling device.

It is to be understood that the invention is not limited to the particular embodiments and examples illustrated in the drawings and described herein; instead, it encompasses all modifications and variations within the scope of the appended claims. The actions of methods disclosed herein may be expressed either in the gerund form (e.g. generating, transmitting) or in the infinite form (e.g. to generate, to transmit).

## Claims

1. A method (100) of operating a working equipment arrangement (1) for load handling, the working equipment arrangement (1) comprising:
- a movable arm (3) for moving a load (9) from a first position to a second position and comprising a plurality of arm sections, pivot joints or telescopic connections joining the arm sections, a set of actuators (5) for operating movements of the arm sections, and a load manipulator (7) for engaging the load (9) during the load handling;
- a sensor system (10) comprising a plurality of sensor units (12) for monitoring present positions of the plurality of arm sections and for monitoring operational status of the working equipment arrangement (1);
- a first interface device (20.1), such as a remote manoeuvring unit, for receiving operator input data for the load handling; and
- a controller (30);
the method (100) comprising:
- receiving (110), by the controller (30), a set of sensor input data from the sensor system (10);
- determining (120), by the controller (30), a set of present working conditions of the working equipment arrangement (1) based on the received set of sensor input data;
- receiving (130), by the controller (30), operator input data from the first interface device (20.1);
- controlling (140), by the controller (30), the load handling with the movable arm (3) based on the received operator input data and the determined set of present working conditions;
- managing (150) a first communication session (A) between the working equipment arrangement (1) and an external server (CS) over a wireless network, the first communication session (A) comprising communication of the set of present working conditions of the working equipment arrangement (1);
- managing (160) a second communication session (B) between the external server (CS) and a second interface device (20.2) for an operator 20 of the working equipment arrangement, the second communication session (B) comprising communication of at least one present working condition of the working equipment arrangement (1);
- transferring (170) the at least one present working condition of the working equipment arrangement (1) to the second interface device (20.2) via the external server (CS); and
- communicating (180) the at least one present working condition of the working equipment arrangement (1) to the operator (20).

2. The method of claim 1, comprising transferring (175) the at least one present working condition of the working equipment arrangement (1) from the second interface device (20.2) to a third interface device (20.3) and communicating the at least one present working condition to the operator (20) by the third interface device (20.3).

3. The method of claim 2, wherein the third interface device (20.3) comprises an augmented reality device or a virtual reality device and the method (100) comprises providing the at least one present working condition as a graphical overlay.

4. The method of any preceding claim, wherein the second interface device (20.2) comprises, or is adapted to be connected to, an acoustic transducer and the method comprises providing the at least one present working condition to the operator (20) as audio.

5. The method of claim 4, comprising providing the present working condition as spoken language.

6. The method of any preceding claim, comprising generating an instruction for the operator (20) of the working equipment arrangement (1), the instruction being based on the set of present working conditions and being indicative of a recommended operator input data, the method (100) comprising communicating the generated instruction to the operator.

7. The method of claim 6, comprising generating a set of instructions for an operator (20) of the working equipment arrangement (1) and communicating the generated set of instructions to the operator.

8. The method of any preceding claim, comprising performing a test of the working equipment arrangement (1), such as a Vertical Stability Limit test for a working equipment arrangement in the form of a loader crane.

9. The method of any preceding claim, comprising causing the working equipment arrangement (1) and the second interface device (20.2) to communicate their respective geographical positions to the external server (CS), and wherein managing (170) the second communication session (B) comprises taking a distance between the working equipment arrangement (1) and the second interface device (20.2) into account, e.g. only permitting the second communication session (B) when said distance is below a predefined threshold distance.

10. A computer program product comprising computer-executable instructions which, when executed by the second interface device (20.2), cause the second interface device (20.2) to carry out the method of any one of claims 6 to 9.

11. A use of the method of any preceding claim for operating a working equipment arrangement (1).

12. The use of claim 11 for performing a test of the working equipment arrangement, such as a Vertical Stability Limit test for a working equipment arrangement in the form of a loader crane, wherein said use comprises an operator (20) performing the test while utilising the communicated at least one present working condition.

13. A working equipment arrangement (1) for load handling, comprising:
- a movable arm (3) for moving a load (9) from a first position to a second position and comprising a plurality of arm sections, pivot joints or telescopic connections joining the arm sections, a set of actuators (5) for operating movements of the arm sections, and a load manipulator (7) for engaging the load (9) during the load handling;
- a sensor system (10) comprising a plurality of sensor units (12) for monitoring present positions of the plurality of arm sections and for monitoring operational status of the working equipment arrangement (1);
- a first interface device (20.1), such as a remote manoeuvring unit, for receiving operator input data for the load handling;
- a controller (30) arranged to:
- receive a set of sensor input data from the sensor system (10);
- determine a set of present working conditions of the working equipment arrangement (1) based on the received set of sensor input data;
- receive operator input data from the first interface device (20.1);
- control the load handling with the movable arm (3) based on the received operator input data and the determined set of present working conditions;
- a communication interface device (30.1) connected to the controller (30) and arranged to manage a first communication session (A) between the working equipment arrangement (1) and an external server (CS) over a wireless network, the first communication session (A) comprising the set of present working conditions;
**characterised in that** the working equipment arrangement (1) is configured to, via a second communication session (B) between the external server (CS) and a second interface device (20.2) for an operator (20) of the working equipment arrangement, enable the second interface device (20.2) to:
- receive at least one present working condition from the controller (30) via the external server (CS); and
- communicate said at least one present working condition to the operator (20).

14. The working equipment arrangement of claim 13, wherein the second interface device (20.2) is arranged to communicate the at least one present working condition to the operator via a third interface device (20.3).

15. The working equipment arrangement of claim 13 or 14, wherein the working equipment arrangement (1) is a loader crane configured to be mounted on a vehicle and for loading the load (9) onto the vehicle and unloading the load (9) from the vehicle.
